# EUROPEAN PATENT APPLICATION

(11) **EP 2 830 169 A2**
(43) Date of publication of application: **28.01.2015**
(21) Application number: 14160263.1
(22) Date of filing: 17.03.2014
(51) Int. Cl.: H01S 3/23, H01S 3/00, G02F 1/35, H01S 3/10

(54) **Method and device for time-multiplexing of light pulses**

(30) Priority: 22.07.2013 LT 2013501
(71) Applicant: Valstybinis moksliniu tyrimu institutas Fiziniu ir technologijos mokslu centras, 02300 Vilnius (LT)
(72) Inventor: Regelskis, Kestutis, LT-05129 Vilnius (LT); Raciukaitis, Gediminas, LT-06226 Vilnius (LT)
(74) Representative: Draugeliene, Virgina Adolfina

(57) **Abstract**

This invention relates to the field or laser technology and is designed to multiplex in time laser pulses from several initial laser sources, generating a sequence of sum-frequency pulses in the second-order nonlinear medium. The light pulse generation method comprises direction of light pulses generated by separate laser sources to the optical means, where light pulses generated by separate laser sources are composed in one sequence of light pulses, and said light pulses propagate in the same trajectory, composing a multiplexed in time beam of light pulses. In order to increase energy and average power of the sequences of multiplexed in time light pulses of the summed optical frequency, said optical means is at least one second-order nonlinear medium, light pulses generated by separate laser sources are directed to it at predetermined time moments in directions that satisfies the phase-matching conditions, the light pulses of the summed optical frequency are generated at different time moments in second-order nonlinear medium, and they do not overlap and compose multiplexed in time beam of light pulses.

## Description

The present invention relates to the field of laser technology, namely to method and device for time-multiplexing of light pulses of several initial laser sources, by generating a sequence of the sum-frequency laser pulses in a second-order nonlinear medium.

The sum-frequency laser pulses multiplexed in time compose the sequence of light pulses that do not overlap in time. They are separated in time and propagate along the same optical trajectory. Optical frequency of the combined light pulse beam is equal to the sum of optical frequencies of the separate pulses. Energy and average power of the sequences of the optical pulses with the summed frequency which are generated with the proposed method are proportional to the sum of energies and average powers of all multiplexed light sources pulses, accordingly. Using this method, it is possible to generate the multiplexed in time sequences of the light pulses with the summed optical frequency possessing the high energy (in order of kilojoules) and high average power (in order of kilowatts). Using an additional methods, when every light pulse of the summed optical frequency is generated in a different area (point) of the second-order nonlinear optical medium in order to avoid local heating and optical damage of the nonlinear medium, it is possible to generate energies of several megajoules and average power of several megawatts in the multiplexed in time sequence of the light-pulse with the summed optical frequency.

It is known the laser-beam combining method and device, which combines several laser beams in a nonlinear medium to a single laser beam with a higher optical frequency and higher energy pulses. The optical nonlinear medium is a second-order nonlinear medium, where the initial laser beams are summed in pairs by adding their frequencies due to nonlinear interaction, and, by satisfying the phase-matching condition, the sum-frequency beams are combined into a single beam. The known method is published in European patent application EP2194426 (A1), 2010-06-09. In the above mentioned method and device for laser beams combining, the summation and combination of laser beams is performed by combining the laser beams in pairs by generating the summed optical frequency. Disadvantage of this method is that the phase-matching condition has to be precisely satisfied between the beams of summed optical frequency, because that beams have constructively interfere and be combined into a single beam. Relative phase of laser beams should be controlled precisely to ensure the phase-matching condition between the beams of summed optical frequency for the constructive interference and combination of all incoming beams into a single beam. For that, it is essential to have a complex means to detect and control phases of the beams that should combine together.

Moreover, in the above mentioned method for the laser beams combining, laser radiation has to be of high coherence and with narrow spectrum in order to control relative phases of the laser beams.

Further, in the above mentioned method of non-coherent combining (spectral combining) of laser beams, the lasers beams that are summed in pairs to the laser beams of summed optical frequency should be of different optical frequencies. In this case, there is no inverse parametric interaction between combined beams, and laser beams that are combined have to be of different optical frequencies, i.e. with this method it is only possible to combine laser beams with different optical frequencies.

Further, in the above described method for non-coherent (spectral combining) combination of lasers beams to the beams of summed optical frequency, the original laser beams should be of sufficiently high intensity, that an effective generation of beams of summed optical frequency in the nonlinear medium takes place. The total radiation intensity in a nonlinear medium is proportional to the number of combined beams, but the radiation intensity is limited by the optical-damage threshold of the nonlinear medium. Therefore, the number of beams to be combined is limited and practically, it is possible to combine only several laser beams.

It is known method and device for time-multiplexing of laser pulses, where radiation of two pulsed lasers resonators, composed from high reflection mirrors and laser active media, are combined with an electro-optic modulator, which periodically change polarization of orthogonally polarized laser beams combined by a polarizer to a beam with the same *p*-type polarization. The output pulse repetition rate of the device is two times higher than that of the separate pulsed lasers resonators. With this method, it is possible to combine more than two pulsed lasers resonators. The pulse repetition rate and average power of combined in time resonators can be higher than it is possible to achieve in every separate pulsed laser resonator. This method and device is disclosed in the patent application DE102007002472 (A1), 2008-07-17, "Multi-channel laser, particularly solid state laser, comprises two optical resonator branches with high reflecting mirrors and two active mediums, and two electro-optical Q-switch modulators are provided to control polarization of light".

The drawback of this method and device is that the electro-optic modulator has to be precisely synchronized with the laser pulses propagating in both resonators, which needs complex and precise synchronization schemes.

Further, the repetition rate of laser beams combined according to the proposed method is limited by of the electro-optic modulator, and even in the best case is limited to several megahertz (MHz).

Moreover, in the above described method and device for combining of pulsed laser resonators, it is necessary to use additional optical elements, every of them introduce optical loss, and, therefore, it is not possible to combine no more than four resonators.

The aim of this invention is to increase average power and energy in a sequence of light pulses by generating the summed optical frequency and multiplexing the pulses in time, and to simplify a scheme for device design and realization.

The problem can be solved by the proposed method for time-multiplexing of light pulses when light pulses of separate laser sources are directed to an optical means, in which the light pulses of separate laser sources are disposed in to a single light-pulse sequence, in which said pulses propagate along the same optical path, composing the beam of light pulse multiplexed in time. The optical means is at least one second-order nonlinear medium, where light pulses are directed from the several separate laser sources at the predetermined time moments in the phase-matching directions, then by using the nonlinear interaction and by satisfying the phase-matching condition in the nonlinear medium the light pulses of summed optical frequency are generated at that times moments, and the pulses of summed optical frequency do not overlap in time, propagate in the same trajectory and compose the multiplexed in time beam of light pulses.

Advantage of the proposed method is, that by multiplexing in time the pulses generated by several laser sources in the second-order nonlinear medium by satisfying the nonlinear interaction phase-matching condition, sequences of multiplexed in time light pulses are generated with summed optical frequency, and energy and average power in the sequence is proportional to the sum of pulses energies and average powers of all combined pulsed light sources (lasers), This method allow generating the high energy (kJ) and high average power (kW) in the multiplexed in time sequences of light pulse with the summed optical frequency without any complex equipment and sophisticated conditions.

Further, in the proposed method of the present invention the light pulses of the laser sources at predetermined time moments are non-collinearly directed in pairs to the second-order nonlinear medium, where the light pulses of the each pair overlap and by satisfying the non-collinear phase-matching condition in different time moments the light pulses of the summed optical frequency are generated respectively at different time moments. The pulses which are collinearly directed from the laser source to the same second-order nonlinear medium, where by satisfying the collinear interaction phase-matching conditions for nonlinear interaction, the light pulses of the summed optical frequency are generated respectively at different time moments, where all generated light pulses of the summed optical frequency propagate in the same trajectory, do not overlap and compromise the beam of light pulse multiplexed in time. An advantage is that the non-collinear propagating light pulses are separated in far field and the number of the pulsed laser sources, which can be multiplexed in time, is practically unlimited.

Another embodiment of the present invention is device for multiplexing light pulses in time, which comprises several light sources, which generate light pulses, an optics, which directs the light pulses into an optical means for disposing the light pulses from the several light sources to a single sequence, in which the said light pulses propagate in the same trajectory, comprising one multiplexed in time beam of the light pulses. The said optical means is at least one second-order nonlinear medium, where the light pulses are directed from the several separate laser sources, and has a means for direction of the light pulses from the several separate laser sources in the phase-matching directions to the second-order nonlinear medium at predetermined times moments, where by satisfying the phase-matching conditions for nonlinear interaction, light pulses of summed optical frequency are generated respectively at that time moments, which do not overlap in time, propagate in the same trajectory and produce the multiplexed in time beam of the light pulses of the summed optical frequency.

The said means for direction of the light pulses from the several separate laser sources to the second-order nonlinear medium at the predetermined time moments may be a synchronization device, which synchronizes light pulses generated by laser sources in such a way that they reach the second-order nonlinear medium at the predetermined time moments, to ensure that light pulses of the summed optical frequency are generated in the second-order nonlinear medium, which propagate in the same trajectory, do not overlap in time and compose the multiplexed in time beam of light pulses.

Further, the said means for direction of the light pulses from the several separate laser sources to the second-order nonlinear medium at the predetermined time moments may be constructed in such a way that the said laser sources comprises one master laser and a beam splitter, which splits light pulses generated by master laser to several branches which include respectively delay lines and laser amplifiers in them. Delay time of different branch is selected in such a way that the light pulses reach the second-order nonlinear medium in the predetermined time moments and generate the light pulses of summed optical frequency that propagate in the same trajectory, do not overlap in time and compose the multiplexed in time beam of light pulses.

Further the optical means may be constructed from several second-order nonlinear media, which are located sequentially on the same optical axis, and the light pulses, generated by the several separate laser sources are directed at the predetermined time moments to each second-order nonlinear medium and by satisfying the phase-matching conditions for nonlinear interaction, light pulses of summed optical frequency are generated in each of the second-order nonlinear media at that time moments, propagating in the same trajectory, they do not overlap in time and produce the multiplexed in time beam of light pulses.

In the other device construction that has an advantage, made according the proposed invention, an appropriate dichroic mirror may be placed between neighbouring second-order nonlinear media to direct the light pulse collinearly to the appropriate second-order nonlinear medium.

The said second-order nonlinear medium is a birefringent nonlinear crystal for second harmonics or summed optical frequency generation (for example: LBO, BBO, LN, KTP, KDP and others), periodically-poled nonlinear crystal (for example: PPLN, PPLT, PPKTP and others), a nonlinear crystal with formed waveguide or any other device which posses the second-order nonlinearity not equal to zero (χ⁽²⁾≠0).

By time-multiplexing of light pulses generated by several separate laser sources and using additional means for subsequent generation of the light pulses of summed optical frequency at different location of the second-order nonlinear media, perpendicular to the light-pulse propagation direction in order to avoid local heating and optical damage of the said second-order nonlinear medium, it is possible to generate the multiplexed in time pulses sequences with the summed optical frequency having megajoule (MJ) energies and megawatt average power, propagating in the same trajectory.

Moreover, in the above proposed device for the laser pulse time-multiplexing, it is possible almost without limits to increase the average power of the multiplexed in time pulse sequence with the summed optical frequency, respectively by increasing the number of the separate laser sources, every separate laser source or pair of separate laser sources is added independently to the other separate laser sources.

Moreover, in the method for multiplexing in time the light pulses generated by the separate laser sources generated, light pulses with higher - summed optical frequency are generated, and, therefore, there is no need of other additional means for doubling optical frequency. Moreover, the method for multiplexing in time the light pulses generated by separate laser sources is not sensitive to degradation of separate laser sources, and energy and average power of the multiplexed in time pulses sequence with the summed optical frequency decrease proportionally to the pulse energy and average power of the stopped working laser sources.
Fig. 1 - shows an optical scheme of proposed device, in which light pulses generated at different time moments by separate laser sources are multiplexed in time by generating the summed optical frequency pulses in one second-order nonlinear medium.
Fig. 2 -shows an optical scheme proposed device, where light pulses generated by separate laser sources (laser sources not shown) are multiplexed in time by generating the summed optical frequency in several second-order nonlinear mediums.
Fig. 3 -shows an optical scheme of proposed device, where the laser sources are composed from one original laser and the beam splitter, which splits light pulses generated by original laser in several separate branches, the delay lines with different delay settings and laser amplifiers.
Fig. 4 - shows angular distribution of trajectories of the light pulses generated by separate laser sources and the multiplexed in time beams of summed optical frequencies, which satisfy the second-type non-collinear phase-matching conditions and the light pulses which are summed have the same polarization.
Fig. 5 - shows angular distribution of trajectories of the light pulses generated by separate laser sources and the multiplexed in time beams of summed optical frequencies, which satisfy the first-type non-collinear phase-matching conditions and the light pulses that are summed are orthogonally polarized.
Fig. 6 - shows an optical scheme of proposed device, where light pulses generated by separate laser sources at different time moments are multiplexed in time to a sequence of the light pulses of summed optical frequency by scanning the light pulses trajectories in the second-order nonlinear medium using a rotating mirror.
Fig. 7 - shows an optical scheme of proposed device, where the trajectories of light pulses in the second-order nonlinear medium are changed by rotating and translating the second-order nonlinear medium.

The proposed method for time-multiplexing of light pulses comprises the operation sequence as follows: light pulses generated by separate laser sources are directed at the predetermined time moments to at least one second-order nonlinear medium at the phase-matching directions, where the propagating light pulses satisfy the phase-matching conditions for nonlinear interaction and at that time moments generate the light pulses of the summed optical frequency, which do not overlap in time, propagate in the same direction and compose the multiplexed in time beam of light pulses.

Light pulses from said laser sources at predetermined time moments are non-collinearly directed in pairs to the second-order nonlinear medium. The light pulses of each pair overlap in the second-order nonlinear medium by satisfying the non-collinear phase-matching condition for nonlinear interaction and generate respectively in different time moments light pulses with the summed optical frequency. Further, pulses which are directed collinearly from the laser source to the second-order nonlinear medium, generate the light pulses of summed optical frequency by satisfying the collinear phase-matching conditions for nonlinear interaction and generate respectively in different time moments light pulses with the summed optical frequency. All generated light pulses of summed optical frequency propagate in the same trajectory, they do not overlap in time with each other and compose the multiplexed in time beam of light pulses.

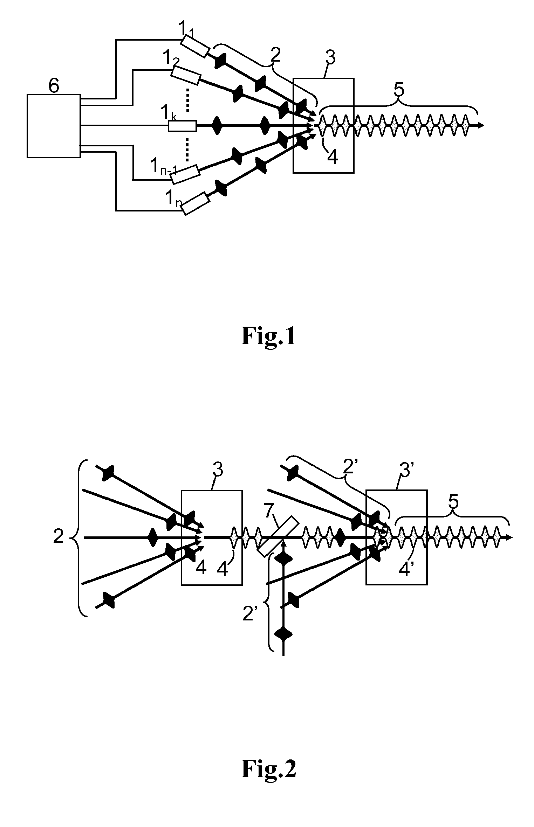

Device which realizes the proposed method, where light pulses 2 generated by several separate laser sources (1₁-1ₙ) are multiplexed in time is shown in Fig. 1. The light pulses 2 generated by several separate laser sources (1₁-1ₙ) are delayed in such a way that the light pulses of summed optical frequency 4 generated in the second-order nonlinear medium 3 do not overlap in time and propagate in the same trajectory composing the light pulse sequence 5 with the summed optical frequency. In order to fit precisely relative delay of the light pulses, the separate laser sources (1₁-1ₙ) have to be synchronized with the synchronization device 6.

Fig. 2 shows another implementation of the device for time-multiplexing of light pulses, in which light pulses 2 generated by a group of several separate laser sources (laser sources not shown) are directed to the first second-order nonlinear medium 3 and by satisfying the phase-matching conditions for nonlinear interaction the light pulses 4 with summed optical frequency are generated. The said light pulses 4 with the summed optical frequency are directed trough the dichroic mirror 7 to another second-order media (3', 3", ...) that are placed behind the first second-order medium. The light pulses (2', 2",....) generated by every next group of separate several laser source are directed to following - different second-order medium (3', 3", ...) and by satisfying the phase-matching conditions for nonlinear interaction, in each of these second-order nonlinear media (3', 3", ...) the light pulses (4', 4", ...) with the summed optical frequency are generated, they are separated in time and propagate in the same trajectory, composing the sequence 5 of light pulses with summed optical frequency.

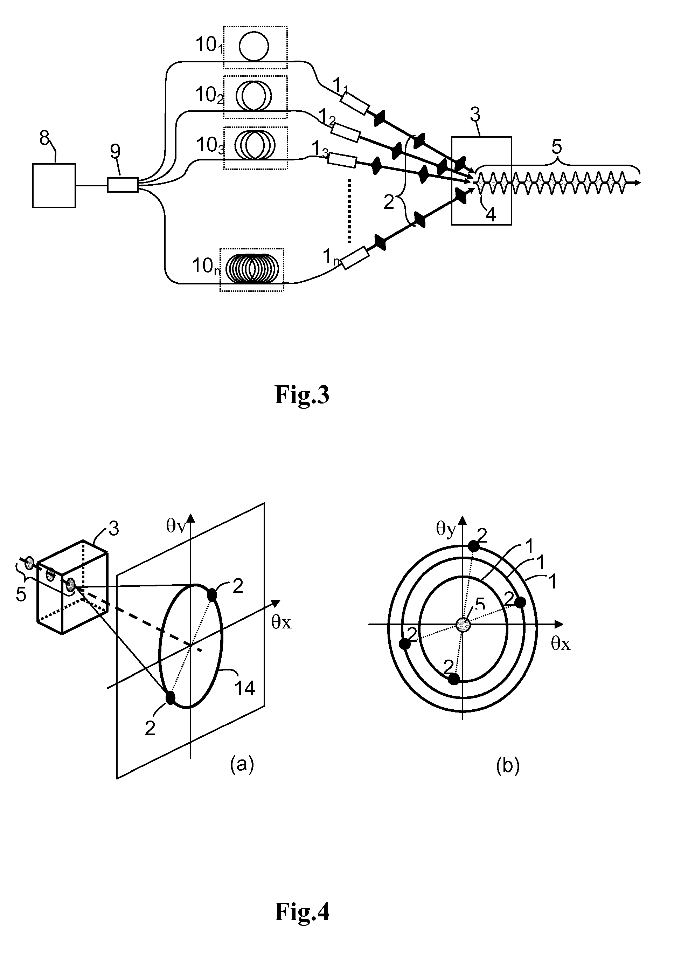

Fig. 3 shows the scheme analogous to Fig. 1. In this scheme, instead of the synchronization device 6, there are used the master-seed laser 8, beam splitter 9, which splits pulses from the master laser 8 to the several branches, each of which includes respectively delay lines (10₁-10ₙ) and laser amplifiers, which all form the laser sources (1₁-1ₙ). A fiber beams splitter 9 splits the light pulses generated by the master-seed pulse laser 8 to several optic branches, where there are different delay lines (10₁-10ₙ) made of optical fibers with different length for tuning the light pulses delay.

Fig.4. shows propagation trajectories of light pulses generated by separate laser sources and angular distribution of trajectories of sequences of the multiplexed in time light pulses with the summed optical frequency, satisfying the first-type non-collinear phase-matching conditions, when light pulses to be summed have the same polarization. The angular distribution of trajectories for the light pulses 2 of the same optical frequencies, generated by the separate laser source and satisfying the non-collinear phase-matching conditions in the second-order nonlinear medium 3 compose a ring 14 and trajectories of the light pulses 2 generated by the separate laser sources cross each other in one point, making a cone in the second-order nonlinear medium 3, (Fig. 4a). The angular distribution of trajectories of light pulses generated from separate laser sources with different optical frequencies compose a system of concentric circles 14 (Fig. 4b) in the second-order nonlinear medium 3 by satisfying the non-collinear interaction first-type phase-matching condition, and trajectories of the light pulses 2 generated by the separate laser sources overlap in a single point, composing a cone in the second-order nonlinear medium. Direction of the pulses sequences 5 with the summed optical frequencies is in the center of a circle, around which trajectories of directions of the light pulses 2 generated by the separate laser sources are symmetrically located in pairs. In diagrams, θx, θy are for polar coordinates.

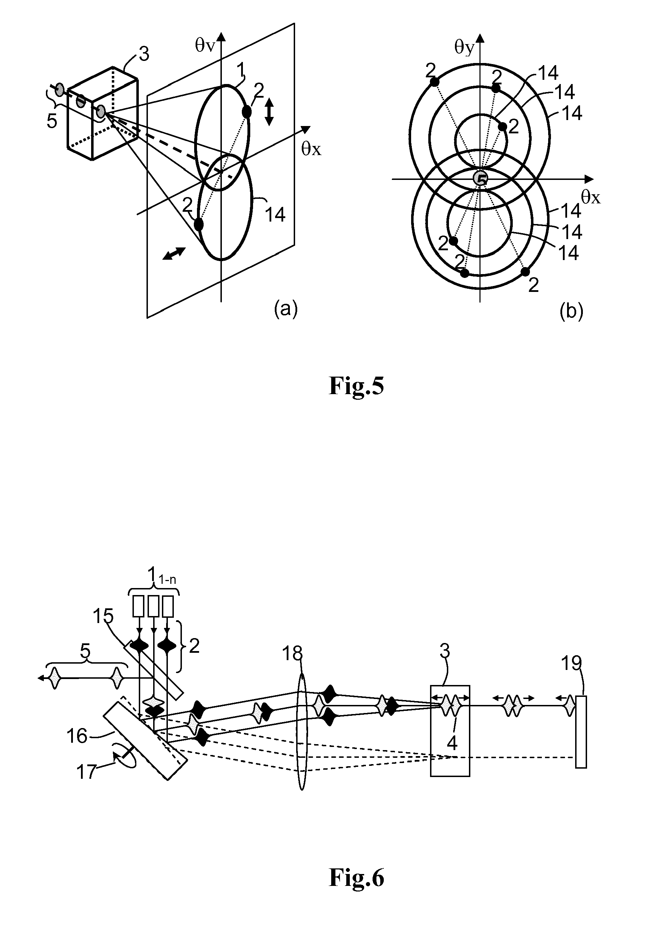

Fig. 5. shows the trajectories of light pulses 2 generated by separate laser sources and the angular distribution of propagation trajectory for the time-multiplexed light pulses sequences 5 with the summed optical frequency, when the second-type non-collinear phase-matching conditions are satisfied, and the light pulses to be summed have perpendicular polarization. The angular distribution of trajectories of the light pulses 2 with the same optical frequencies generated by separate laser sources when the non-collinear interaction second-type phase-matching conditions in the second-order nonlinear medium is satisfied, compose two shifted circles 4 and trajectories of the light pulses 2 generated by separate laser sources cross each over in a single point in the second-order nonlinear medium 3, composing two cones with intersecting each other vertexes (Fig. 5a.). Light pulses 2 that propagate in the first and the second cones have perpendicular polarization. The angular distribution of light beams 2 with different optical frequencies generated by separate laser sources, by satisfying the non-collinear interaction second-type phase-matching conditions in the second-order nonlinear medium, compose a system of two separated concentric circles 14 (Fig. 5b) and trajectories of light pulses 2 generated by separate laser sources cross each other in a single point in second-order nonlinear medium 3 and compose cones. Direction of the pulse sequence 5 with the summed optical frequency is in said cones vertexes, around which trajectories of directions of light pulses 2 from separate laser sources are symmetrically located in pairs. In diagrams, θx, θy are for angular coordinates.

Fig. 6. shows the proposed device for multiplexing in time of light pulses generated by separate laser sources, which scans the propagating light pulses trajectories in the second-order nonlinear medium in order to avoid its optical damage and the phase-matching condition mismatch because of heating generated by absorbed radiation in the second-order nonlinear medium. Device is for generation of the light- pulse sequences with the summed optical frequency and high energy and high average power. Device is composed from separate laser sources (1₁-1ₙ) that generates light pulses 2, dichroic mirror 15, which is transparent for the light beams 2 generated by the separate laser sources (1₁-1ₙ), the wedge mirror 16, rotating around its axis 17 for changing-scanning of the propagation direction of the light beams 2, the lens 18 placed in at its focal length from rotating mirror for summation of the light pulses 2 to the sequences 5 of the light pulses of the summed optical frequency 4, the mirror 19 to reflect back the sequences 5 of the light pulses of the summed optical frequency 4. The sequences 5 of the summed optical frequency pulses 4 pass through the second-order nonlinear medium 3, the lens 18, are reflected from rotating mirror 16 and are reflected out by the dichroic mirror 15. Every light pulse 2 sequentially generated by the separate laser source (1₁-1ₙ) and the light pulses of the summed optical frequency 4 propagate through different location in the second-order nonlinear medium 3. At the device output, the sequences 5 of the light pulses of the summed optical frequency 4 propagate in one steady trajectory.

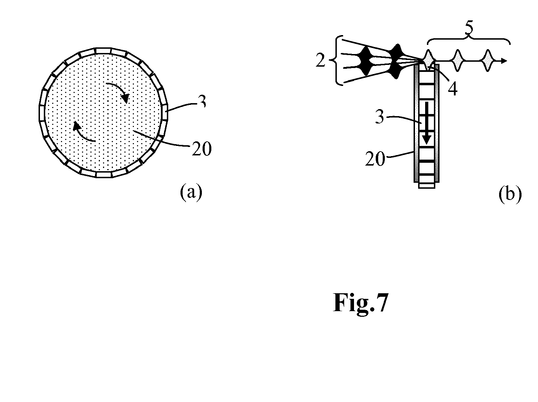

Fig. 7. shows the proposed device for multiplexing in time the light pulses 2 generated by separate laser sources, which scans the propagating trajectories of light pulses in the second-order nonlinear medium, to avoid its optical damage and the phase-matching condition mismatch because of heat generated by absorbed radiation in the second- order nonlinear medium. The device is for generation of the light pulse sequences with the summed optical frequency and high energy and high average power. The device is composed from the second-order nonlinear media 3 that are attached to the rotating cylinder 20. The rotating cylinder 20 is made of material with a high thermal conductivity and has good thermal contact with the second-order nonlinear media 3. The light pulses 2 generated by separate laser sources (laser sources not shown) are directed to the second-order nonlinear media 3, attached to the rotating cylinder 20, where the pulses 2 are transformed to sequences of the light pulses of the summed optical frequency. When the cylinder 20 rotates, the initial light pulses 2 and generated sequences 5 of the summed optical frequency pulses 4 propagate through different places in the second-order nonlinear media 3, and heat generated due to optical absorption in the second-order nonlinear medium 3 is dissipated.

## Claims

1. Method for multiplexing light pulses in time when the light pulses (2) generated by separate laser sources (1₁-1ₙ) are directed in to an optical means for disposing those pulses in one sequence, where the pulses propagate in a same trajectory, composing a multiplexed in time beam of light pulses, **characterized in that** the optical means is designed as at least one second-order nonlinear medium (3) where
the light pulses (2) generated by the separate laser sources (1₁-1ₙ) are directed at predetermined time moments and
by satisfying the phase-matching conditions for nonlinear interaction in the second-order nonlinear medium (3), light pulses (4) of summed optical frequency are generated at that time moments so, that
they do not overlap in time with each other, propagate in the same trajectory and compose the multiplexed in time beam (5) of the light pulses (4).

2. Method according to claim 1, **characterized in that**
the light pulses (2) from the laser sources (1₁-1ₙ) at predetermined time moments are directed:
- non-collinearly and in pairs enter the second-order nonlinear medium (3), where the light pulses (2) of the every pair overlap and, by satisfying the non-collinear phase-matching conditions for nonlinear interaction, the light pulses (4) of a summed optical frequency are generated respectively at different time moments, and
- collinearly from the laser source (1ₖ) enter the second-order nonlinear medium (3), where by satisfying the collinear phase-matching conditions for nonlinear interaction, the light pulses (4) of the summed optical frequency are generated respectively at different time moments, where
all generated said light pulses (4) of the summed optical frequency propagate in the same trajectory, in which do not overlap in time with each other composing the multiplexed in time beam (5).

3. Device for multiplexing light pulses in time, comprising several of lasers sources (1₁-1ₙ) which generate the light pulses (2), an optics which directs the light pulses (2) into an optical means for disposing the light pulses generated by the separate laser sources (1₁-1ₙ) in one sequence where the light pulses propagate in the same trajectory, composing one multiplexed in time beam of light pulses, **characterized in that** the optical means is at least one second-order nonlinear medium (3), where the light pulses (2) generated by the separate laser sources (1₁-1ₙ) are directed by the optics and
further has a means for directing the light pulses (2) generated by the separate laser sources (1₁-1ₙ) to said second-order nonlinear medium (3) at predetermined time moments, where,
by satisfying the phase-matching conditions for nonlinear interaction, light pulses (4) of summed optical frequency are generated respectively at said time moments and
propagate in the same trajectory, do not overlap in time with each other and compose multiplexed in time beam (5) of the light pulses (4).

4. Device according to claim 3, **characterized in that,** said means for directing the light pulses (2) generated by separate laser sources (1₁-1ₙ) to the second-order nonlinear medium (3) at the predetermined time moments is a synchronization means (6) to synchronize the light pulses (2) generated by the laser sources (1₁-1ₙ) in such a way that they reach the second-order nonlinear medium (3) respectively at said time moments to generate in the second-order nonlinear medium (3) the light pulses (4) of summed optical frequency, which propagate in the same trajectory, do not overlap in time with each other and compose the multiplexed in time beam (5) of the light pulses (4).

5. Device according to claim 3, **characterized in that,** said means for directing the light pulses (2) generated by the separate laser sources (1₁-1ₙ) to the second-order nonlinear medium (3) at predetermined time moments is designed so,
that the laser sources (1₁-1ₙ) comprise one master laser (8) and a beam splitter (9), which splits the beam generated by the master laser (8) to separate branches, each of which includes respective delay line (10₁-10ₙ) and laser amplifier, forming respectively the laser sources (1₁-1ₙ), where
delay time of different delay lines (10₁-10ₙ) is selected in such a way that the light pulses (2) enter the second-order nonlinear medium (3) respectively at said time moments to generate the light pulses (4) of summed optical frequency, which propagate in the same trajectory, do not overlap in time with each other and compose multiplexed in time beam (5) of the light pulses (4).

6. Device according to any one of the claims 3-5 **characterized in that** said optical means is designed as several second-order nonlinear media (3, 3', 3"), sequentially placed on the same optical axis, and the light pulses (2, 2', 2") generated by separate laser sources (1₁-1ₙ) respectively are directed to said nonlinear media at predetermined time moments, and
the light pulses (4) of summed optical frequency propagating in the same direction are generated respectively in each of the second-order nonlinear media (3, 3', 3") and they do not overlap in time with each other and compose multiplexed in time beam (5) of light pulses (4).

7. Device according to claim 6, **characterized in that** between neighbouring the second-order media (3, 3'), (3', 3") respective a dichroic mirror (7, 7') is placed to direct the light pulse (2', 2") collinearly to respective nonlinear medium (3', 3 ").

8. Device according to any one of claims 3-6, **characterized in that** said second-order nonlinear media (3, 3', 3") is a nonlinear crystal with birefringence properties for the second optical harmonics generation or summed optical frequency generation (for example LBO, BBO, LN, KTP, KDP and others), periodically-poled nonlinear crystal (for example PPLN, PPLT, PPKTP and others), nonlinear crystal with designed waveguide or any other device which posses the second-order nonlinearity not equal to zero (χ⁽²⁾ ≠ 0).

9. Device according to the any one of claims 3-6, **characterized in that** the said laser sources (1₁-1ₙ), generating light pulses (2), are fiber lasers.
